# FASCICULE DE BREVET EUROPEEN

(11) **EP 1 371 870 B1**
(45) Date de publication et mention de la délivrance du brevet: **30.05.2007**
(21) Numéro de dépôt: 03291366.7
(22) Date de dépôt: 06.06.2003
(51) Int. Cl.: F16D 65/097, F16D 55/22

(54) **Frein à disque, notamment pour véhicule automobile, patin pour un tel frein et clinquant anti-bruit pour un tel patin**
Scheibenbremse, insbesondere für Personenkraftwagen, Scheibenbremsbelag und Dämpfungsblech für einen solchen Scheibenbremsbelag
Disc brake, in particular for a vehicle, disc brake pad and a noise-damping plate for such a pad

(30) Priorité: 13.06.2002 FR 0207276
(43) Date de publication de la demande: 17.12.2003
(73) Titulaire: Federal Mogul Friction Products SAS, 60400 Noyon (FR)
(72) Inventeur: Renauld, Laurent, 60640 Freniches (FR)
(74) Mandataire: Stankoff, Hélène

(56) Documents cités:
- DE-A- 19 912 957
- GB-A- 2 115 507
- US-A- 4 533 025
- US-A- 4 823 920
- US-A- 5 816 370
- US-B1- 6 170 620
- PATENT ABSTRACTS OF JAPAN vol. 1996, no. 11, 29 novembre 1996 (1996-11-29) & JP 08 177905 A (AISIN SEIKI CO LTD), 12 juillet 1996 (1996-07-12)
- PATENT ABSTRACTS OF JAPAN vol. 004, no. 171 (M-044), 26 novembre 1980 (1980-11-26) & JP 55 123029 A (WATANABE ENG KK), 22 septembre 1980 (1980-09-22)

## Description

La présente invention concerne les freins à disque, notamment pour véhicule automobile.

Un frein à disque, notamment pour véhicule automobile, comporte deux patins destinés à coopérer chacun avec une face latérale du disque à freiner sous l'action de moyens de manoeuvre.

Ces moyens de manoeuvre peuvent comporter deux pistons comme décrit dans le document GB 2 115 507 permettant d'appliquer un effort symétriquement sur le patin.

Ces moyens de manoeuvre peuvent également comprendre un seul piston monté mobile axialement, parallèlement à l'axe du disque, dans un étrier adapté à chevaucher le disque ; le piston est adapté à coopérer avec le patin qui lui fait face selon une zone dite d'appui.

Chaque patin est constitué d'un support métallique portant une garniture de friction, lequel support métallique est symétrique par rapport à un plan, dit de symétrie, qui lui est perpendiculaire et qui est parallèle à l'axe du disque.

On sait qu'en excentrant le point d'application de l'effort de freinage dû au piston, c'est-à-dire donc en décalant l'axe du piston par rapport audit plan de symétrie en le disposant à distance transversale de celui-ci, on régularise l'usure de la garniture de friction, parallèlement au plan du support métallique, ce qui permet de profiter au maximum du volume à user de la garniture de friction.

On sait également qu'un décalage tel que ci-dessus permet de résoudre dans certaines applications les problèmes de bruit lié au frottement de la garniture de friction contre le contre-matériau, à savoir le disque à freiner.

Bien entendu ces décalages sont différents ; le premier étant lié au frein lui-même, on est ainsi amené à le modifier en disposant, entre le piston et le support métallique, un clinquant anti-bruit muni d'une ouverture, laquelle ouverture, lorsque le patin est monté dans le frein, se trouve être disposée au droit de la zone d'appui du piston.

Le clinquant anti-bruit étant avantageusement assujetti au support métallique, par exemple par collage, on comprend que cela nécessite de disposer de deux patins différents pour les freins placés à gauche ou à droite par rapport au plan longitudinal de symétrie du véhicule concerné, notamment lorsque le frein à disque est du type à étrier flottant, le patin intérieur étant alors soumis à l'action du piston et le patin extérieur à la réaction de l'étrier solidaire du cylindre dans lequel se déplace le piston ; ceci est également vrai lorsque l'étrier est du type fixe, chaque patin étant soumis à l'action d'un piston, les deux pistons se déplaçant dans des cylindres disposés dans l'étrier de part et d'autre du disque.

L'invention a pour but d'éviter ces inconvénients, en proposant un patin, équipé d'un clinquant anti-bruit, qui puisse être monté indifféremment dans un frein à disque disposé à gauche ou à droite d'un véhicule.

Un frein à disque suivant l'invention est défini dans la revendication 1.

Avantageusement, lorsque la première ouverture est au droit de la zone d'appui du piston, la seconde ouverture est située en dehors de cette zone d'appui du piston.

De préférence, la zone d'appui du piston est de forme annulaire ; les ouvertures sont oblongues et arquées.

Avantageusement, des moyens de positionnement sont prévus pour positionner le clinquant anti-bruit par rapport au support métallique du patin ; ces moyens de positionnement sont des formes tronconiques complémentaires.

De préférence, des moyens de fixation sont prévus pour fixer le clinquant anti-bruit sur le support métallique ; ces moyens de fixation comprennent des pions portés par le support métallique.

Avantageusement, l'étrier est du type flottant.

En variante, l'étrier est du type fixe.

L'invention a également pour objet un patin destiné à un frein à disque tel que ci-dessus, constitué d'un support métallique portant une garniture de friction, ledit support métallique étant symétrique par rapport à un plan transversal dit de symétrie et portant un clinquant anti-bruit muni d'une ouverture : ledit clinquant anti-bruit est muni d'une seconde ouverture, lesdites ouvertures étant disposées symétriquement par rapport audit plan de symétrie.

L'invention a également pour objet un clinquant anti-bruit pour un tel patin, lequel clinquant comporte deux ouvertures disposées symétriquement par rapport au plan de symétrie.

Les caractéristiques et avantages de l'invention ressortiront d'ailleurs de la description qui va suivre, à titre d'exemple, en référence aux dessins annexés dans lesquels :
- la figure 1 est une vue partielle en coupe d'un frein à disque selon l'invention selon I-I de la figure 3 ;
- la figure 2 est une vue en coupe selon II-II de la figure 1 ;
- la figure 3 est une vue partielle en coupe montrant les deux freins, gauche et droit, d'un même essieu de véhicule automobile ;
- la figure 4 est une vue en plan du support métallique seul du patin des figures 1 et 2 ;
- la figure 5 est une vue en plan du clinquant anti-bruit seul du patin des figures 1 et 2 ;
- la figure 6 est une vue analogue à la figure 1 et correspond à l'autre frein du même essieu que celui du frein de la figure 1.

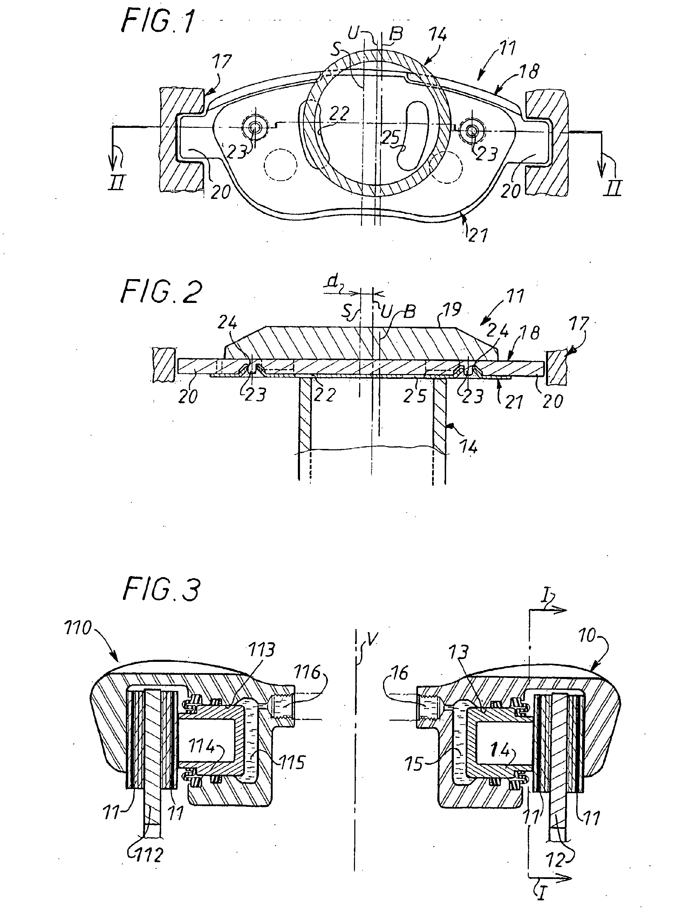

En se reportant aux figures, un frein à disque, notamment pour véhicule automobile, comporte un étrier 10, figure 3, adapté à chevaucher le disque 12 à freiner ; deux patins 11 coopèrent chacun avec une face latérale du disque vers laquelle ils sont poussés sous l'action de moyens de manoeuvre.

Ces moyens de manoeuvre sont ici du type hydraulique et comprennent un cylindre 13 borgne, taillé dans l'étrier 10, dans lequel est monté coulissant un piston 14 creux à section annulaire ; le fond du cylindre 13 et le fond du piston 14 délimitent une chambre à volume variable 15 communiquant avec un orifice d'alimentation 16 relié à un conduit d'alimentation pour un fluide sous pression.

L'étrier 10 enjambe le disque 12 en sorte que, lorsque la chambre 15 est mise en pression, le piston 14 repousse vers le disque 12 le patin 11 interposé entre le piston 14 et la face correspondante du disque 12, et le cylindre 13, donc l'étrier 10, est déplacé en sens opposé et applique l'autre patin 11 sur l'autre face du disque 12.

L'étrier 10 est donc ici du type flottant et les patins 11 sont portés par une chape 17 fixe adaptée à recevoir les efforts globalement tangentiels de réaction dus au couple de freinage.

Le patin 11 est constitué d'un support métallique 18 portant une garniture de friction 19.

Le support métallique 18 est muni d'oreilles latérales 20 par lesquelles il est porté par la chape 17 en y étant monté à coulissement.

Le patin 11 et la chape 17 ont une disposition symétrique par rapport à un plan dit de symétrie dont on voit en S la trace sur les figures, ce plan étant perpendiculaire au plan du support métallique 18 et parallèle à l'axe du disque 12.

Le creux du piston creux 14 étant ouvert vers le disque 12, le piston 14 agit sur le support métallique 18 par son bord frontal de forme annulaire et sa zone d'appui sur ledit support métallique correspond à la partie de son bord annulaire en contact avec celui-ci.

Pour que l'usure de la garniture de friction 19 soit régulière, parallèle à la face en regard du disque 12, on décale la force d'application du piston 14 sur le support métallique 18 vers l'avant du véhicule ; pour ce faire, l'étrier 10 est monté et guidé sur la chape 17 en sorte que l'axe du piston 14 soit dans un plan décalé par rapport au plan de symétrie S d'une quantité d, la trace de ce plan décalé étant référencée U sur les figures.

Pour résoudre des problèmes de bruit, on est amené à décaler encore l'effort d'application du piston 14, notamment également vers l'avant du véhicule.

Pour ce faire, un clinquant anti-bruit 21 est disposé entre le piston 14 et le support métallique 18, lequel clinquant anti-bruit 21 est muni d'une ouverture 22 disposée au droit de la zone d'appui sur le support métallique 18 du piston 14.

Ici, la zone d'appui étant de forme annulaire, l'ouverture 22 est une ouverture oblongue, arquée.

Ainsi, grâce à cette disposition, l'effort d'application du piston 14 sur le support métallique 18 est dans un plan, dont la trace est référencée B, décalé par rapport au plan S d'une quantité supérieure à d.

De façon à constituer un sous-ensemble, le clinquant anti-bruit 21 est solidarisé au support métallique 18 ; cette solidarisation peut se faire par collage ; ici, le support métallique 18 présente sur sa face en regard du piston 14 des pions 23, ici deux pions 23, émergeant du fond de cavités tronconiques.

Ces cavités tronconiques reçoivent des crevés 24 de forme correspondante ménagés dans le clinquant anti-bruit 21 et percés de trous adaptés à recevoir les pions 23 ; ainsi, le clinquant anti-bruit 21 est positionné par rapport au support métallique 18 et agrafé.

Sur la figure 3, on a schématisé les deux freins d'un même essieu d'un véhicule automobile : le frein droit, décrit succinctement jusqu'ici, et le frein gauche dont les pièces jouant le même rôle portent la même référence que les pièces correspondantes du frein droit augmentée de 100.

Lorsqu'un tel patin 11 équipé d'un tel clinquant anti-bruit 21 muni de l'ouverture 22, conçu pour être disposé entre le piston 14 et le disque 12 du frein de la partie droite de la figure 3, est placé entre le piston 114 et le disque 112 du frein de la partie gauche de la figure 3, lequel frein est disposé symétriquement par rapport au précédent et au plan transversal T du véhicule, le décalage de l'effort de poussée du piston n'est pas dans le bon sens ; pour qu'il le soit il faut retourner le clinquant anti-bruit 21 avant son assujettissement au support métallique 18, ce qui conduit à deux patins différents.

Pour éviter cela, l'invention prévoit de munir le clinquant anti-bruit d'une seconde ouverture 25.

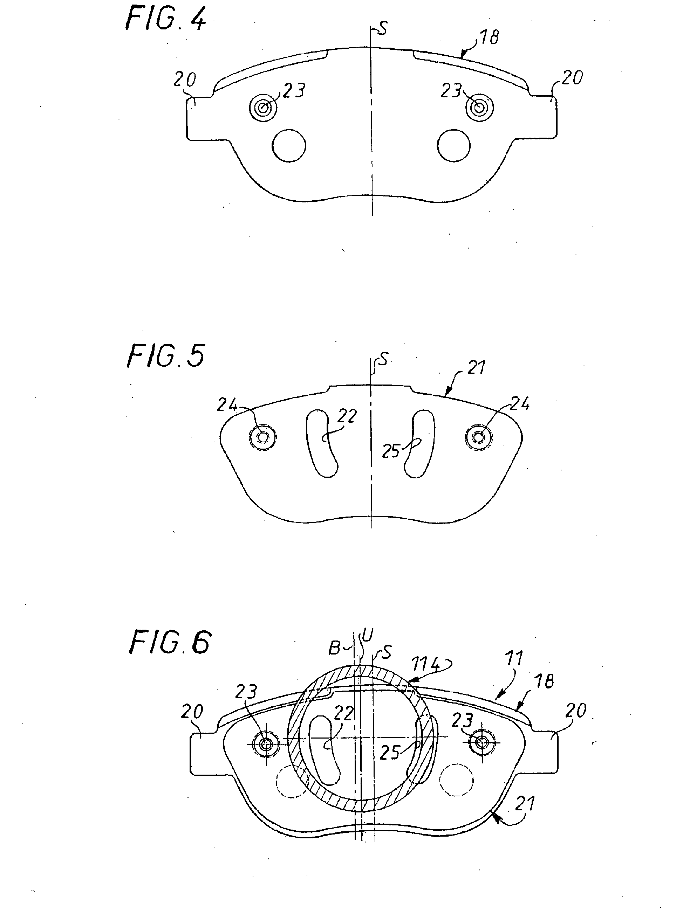

Cette seconde ouverture 25 et la première ouverture 22 sont disposées symétriquement par rapport au plan de symétrie S ; avantageusement, lorsque la première ouverture 22 est au droit de la zone d'appui du piston 14, la seconde ouverture 25 est située en dehors de cette zone d'appui du piston 14 ; ainsi, lorsque ce même patin 11 est monté dans le frein de gauche, c'est l'ouverture 25 qui est au droit de la zone d'appui du piston 114, l'ouverture 22 étant en dehors de cette zone ; dès lors, le point d'application de l'effort du piston est décalé dans le même sens par rapport au véhicule, tant dans le frein de droite que dans le frein de gauche, comme visible sur les figures 1 et 6.

Bien entendu, ceci est valable lorsque le frein à disque est du type à étrier fixe : dans ce cas, la chape 17 et l'étrier sont solidaires et à chaque patin est associé un piston, de part et d'autre du disque.

## Revendications

1. Frein à disque, notamment pour véhicule automobile, comportant deux patins (11) destinés à coopérer chacun avec une face latérale du disque (12,112) à freiner sous l'action d'un unique piston (14,114) monté mobile axialement, parallèlement à l'axe du disque (12,112), dans un étrier (10,110) adapté à chevaucher le disque (12,112), ledit piston (14,114) étant adapté à coopérer selon une zone d'appui avec le patin (11) qui lui fait face, lequel patin (11) est constitué d'un support métallique (18) portant une garniture de friction (19), ledit support métallique (18) étant symétrique par rapport à un plan (S) transversal, dit de symétrie, qui lui est perpendiculaire et qui est parallèle à l'axe du disque (12,112), l'axe du piston (14,114) étant décalé par rapport audit plan de symétrie (S) en étant à distance transversale (d) de celui-ci, un clinquant anti-bruit (21) étant disposé entre ledit piston (14,114) et le support métallique (18) et muni d'une première ouverture (22) disposée au droit de la zone d'appui du piston (14,114), **caractérisé en ce que** ladite première ouverture (22) est adaptée à décaler l'effort d'application dudit piston (14, 114) par rapport au plan de symétrie (S) d'une quantité supérieure à ladite distance transversale (d) et **en ce que** le clinquant anti-bruit (21) porte une seconde ouverture (25), les deux ouvertures (22,25) étant disposées symétriquement par rapport audit plan de symétrie (S).

2. Frein à disque selon la revendication 1, **caractérisé par le fait que**, lorsque la première ouverture (22) est au droit de la zone d'appui du piston (14,114), la seconde ouverture (25) est située en dehors de cette zone d'appui du piston (14,114).

3. Frein à disque selon l'une des revendications 1 ou 2, **caractérisé par le fait que** la zone d'appui du piston (14,114) est de forme annulaire.

4. Frein à disque selon la revendication 3, **caractérisé par le fait que** les ouvertures (22,25) sont oblongues et arquées.

5. Frein à disque selon l'une des revendications 1 à 4, **caractérisé par le fait que** des moyens de positionnement (24) sont prévus pour positionner le clinquant anti-bruit (21) par rapport au support métallique (18) du patin (11).

6. Frein à disque selon la revendication 5, **caractérisé par le fait que** ces moyens de positionnement (24) sont des formes tronconiques complémentaires.

7. Frein à disque selon l'une des revendications 1 à 6, **caractérisé par le fait que** des moyens de fixation (23) sont prévus pour fixer le clinquant anti-bruit (21) sur le support métallique (18).

8. Frein à disque selon la revendication 7, **caractérisé par le fait que** ces moyens de fixation comprennent des pions (23) portés par le support métallique (18).

9. Frein à disque selon l'une des revendications 1 à 8, **caractérisé par le fait que** l'étrier (10,110) est du type flottant.

10. Frein à disque selon l'une des revendications 1 à 8, **caractérisé par le fait que** l'étrier et du type fixe.

## Claims

1. Disc brake, in particular for a motor vehicle, comprising two pads (11) each intended to cooperate with a lateral face of the disc (12,112) to be braked under the action of a single piston (14,114) mounted so that it is axially mobile, parallel to the disc axis (12,112), in a caliper (10,110) adapted to straddle the disc (12,112), said piston (14,114) being adapted to cooperate according to a support zone with the pad (11) facing it, said pad (11) being constituted by a metal support (18) carrying a friction lining (19), said metal support (18) being symmetrical with respect to a transverse plane (S), called plane of symmetry, which is perpendicular to it and which is parallel to the disc axis (12,112), the piston axis (14,114) being displaced with respect to said plane of symmetry (S), by being at a transverse distance (d) from the latter, an anti-noise shim (21) being arranged between the piston (14,114) and the metal support (18) and provided with a first opening (22) aligned with the piston support zone (14,114), **characterized in that** said first opening (22) is adapted to displace the force of application of said piston (14, 114) with respect to the plane of symmetry (S) by a quantity greater than said transverse distance (d) and **in that** the anti-noise shim (21) has a second opening (25), the two openings (22,25) being arranged symmetrically with respect to said plane of symmetry (S).

2. Disc brake according to claim 1, **characterized by** the fact that, when the first opening (22) is aligned with the piston support zone (14,114), the second opening (25) is situated outside this piston support zone (14,114).

3. Disc brake according to one of claims 1 or 2, **characterized by** the fact that the piston support zone (14,114) is ring-shaped.

4. Disc brake according to claim 3, **characterized by** the fact that the openings (22,25) are oblong and curved.

5. Disc brake according to one of claims 1 to 4, **characterized by** the fact that positioning means (24) are provided in order to position the anti-noise shim (21) with respect to the metal support (18) of the pad (11).

6. Disc brake according to claim 5, **characterized by** the fact that these positioning means (24) are complementary tapering shapes.

7. Disc brake according to one of claims 1 to 6, **characterized by** the fact that fixing means (23) are provided in order to fix the anti-noise shim (21) on the metal support (18).

8. Disc brake according to claim 7, **characterized by** the fact that these fixing means comprise pins (23) carried by the metal support (18).

9. Disc brake according to one of claims 1 to 8, **characterized by** the fact that the caliper (10,110) is of the floating type.

10. Disc brake according to one of claims 1 to 8, **characterized by** the fact that the caliper is of the fixed type.

## Patentansprüche

1. Scheibenbremse, insbesondere für ein Kraftfahrzeug, umfassend zwei Backen (11), die jeweils mit einer Seitenfläche einer Bremsscheibe (12, 100) durch Betätigung eines einzigen Kolbens (14, 114) zusammenwirken, der axialbeweglich und parallel zur Achse der Bremsscheibe (12, 112) in einem Sattel (10, 110) montiert ist, der die Bremsscheibe (12, 112) übergreift, wobei der Kolben (14, 114) angepasst ist, um in einem Auflagebereich mit der Backe (11) zusammenzuwirken, die diesem gegenüber angeordnet ist, und wobei der Kolben (11) einen Metallträger (18) umfasst, der einen Bremsbelag (19) aufweist, wobei der Metallträger (18) symmetrisch bezogen auf eine quer verlaufende Symmetrieebene (S) ausgebildet ist, die zu diesem senkrecht und parallel zur Achse der Bremsscheibe (12, 112) angeordnet ist, wobei die Achse des Kolbens (14, 114) bezogen auf die Symmetrieebene (S) um einen Querabstand (d) zu dieser versetzt ist, wobei ein Geräuschdämpfungsblech zwischen dem Kolben (14, 114) und dem Metallträger (18) angeordnet ist und eine erste Öffnung (22) aufweist, die mit dem Auflagebereich des Kolbens (14, 114) fluchtet, **dadurch gekennzeichnet, dass** die erste Öffnung (22) angepasst ist, um die Wirkung der Beaufschlagung durch den Zylinder (14, 114) bezogen auf die Symmetrieebene (S) um einen Betrag zu verschieben, der größer ist als der Querabstand (d), und dass das Geräuschdämpfungsblech (21) eine zweite Öffnung (25) aufweist, wobei die beiden Öffnungen (22, 25) symmetrisch bezogen auf die Symmetrieebene (S) angeordnet sind.

2. Scheibenbremse gemäß Anspruch 1, **dadurch gekennzeichnet, dass** die zweite Öffnung (25) außerhalb des Auflagebereiches des Kolbens (14, 114) angeordnet ist, wohingegen die erste Öffnung (22) mit dem Auflagebereich des Kolbens (14, 114) fluchtet.

3. Scheibenbremse gemäß Anspruch 1 oder 2, **dadurch gekennzeichnet, dass** der Auflagebereich des Kolbens (14, 114) ringförmig ausgebildet ist.

4. Scheibenbremse gemäß Anspruch 3, **dadurch gekennzeichnet, dass** die Öffnungen (22, 25) länglich und bogenförmig ausgebildet sind.

5. Scheibenbremse gemäß wenigstens einem der Ansprüche 1 bis 4, **dadurch gekennzeichnet, dass** Positioniermittel (24) vorgesehen sind, um das Geräuschdämpfungsblech (21) bezogen auf die Metallstütze (18) der Backe (11) zu positionieren.

6. Scheibenbremse gemäß Anspruch 5, **dadurch gekennzeichnet, dass** die Positioniermittel (24) komplementär kegelstumpfförmig sind.

7. Scheibenbremse gemäß wenigstens einem der Ansprüche 1 bis 6, **dadurch gekennzeichnet, dass** Befestigungsmittel (23) vorgesehen sind, um das Geräuschdämpfungsblech (21) auf dem Metallträger (18) zu befestigen.

8. Scheibenbremse gemäß Anspruch 7, **dadurch gekennzeichnet, dass** die Befestigungsmittel Vorsprunge (23) umfasst, die auf der Metallstütze (18) vorgesehen sind.

9. Scheibenbremse gemäß wenigstens einem der Ansprüche 1 bis 8, **dadurch gekennzeichnet, dass** der Sattel (10, 110) einen Schwimmsattel umfasst.

10. Scheibenbremse gemäß wenigstens einem der Ansprüche 1 bis 8, **dadurch gekennzeichnet, dass** der Sattel (10, 110) einen Festsattel umfasst.
